# EUROPÄISCHE PATENTSCHRIFT

(11) **EP 0 789 655 B1**
(45) Veröffentlichungstag und Bekanntmachung des Hinweises auf die Patenterteilung: **10.02.1999**
(21) Anmeldenummer: 95937037.0
(22) Anmeldetag: 30.10.1995
(51) Int. Cl.: B60T 8/00, B60T 8/88

(54) **MIKROPROZESSORANORDNUNG FÜR EIN FAHRZEUG-REGELUNGSSYSTEM**
MICROPROCESSOR ARRANGEMENT FOR A VEHICLE CONTROL SYSTEM
GROUPEMENT DE MICROPROCESSEURS POUR SYSTEME DE REGULATION DESTINE A UN VEHICULE

(30) Priorität: 02.11.1994 DE 4439060
(43) Veröffentlichungstag der Anmeldung: 20.08.1997
(73) Patentinhaber: Continental Teves AG & Co. oHG, 60488 Frankfurt (DE)
(72) Erfinder: FENNEL, Helmut, D-65812 Bad Soden (DE); KANT, Bernhard, D-65239 Hochheim (DE); ESSELBRÜGGE, Hermann, D-64331 Weiterstadt (DE); ZYDEK, Michael, D-35428 Langgöns (DE); GIERS, Bernhard, D-64380 Rossdorf (DE)
(86) Internationale Anmeldenummer: EP9504262
(87) Internationale Veröffentlichungsnummer: WO9614226

(56) Entgegenhaltungen:
- WO-A-91/17069
- WO-A-93/01075
- DE-A- 4 228 893
- ATZ, Bd. 96, Nr. 2, Februar 1994 STUTTGART,DE, Seiten 84-94, XP 000426028 LEFFNER 'ENTWICKLUNGSTAND DER ABS - INTEGRIERTEN BMW SCHLUPFREGELSYSTEME ASC UND DSC'

## Beschreibung

Die Erfindung bezieht sich auf eine Mikroprozessoranordnung, die für ein komplexes Fahrzeug-Regelungssystem vorgesehen ist und die aus mehreren, untereinander durch Bussysteme verbundenen Mikroprozessorsystemen besteht, die zumindest eine Blockierschutz-(ABS) und/oder Antriebsschlupfregelung (ASR) sowie mindestens eine weitere, rechenaufwendige Regelfunktion, wie Giermomentenregelung (GMR), und Überwachungsfunktionen ausführen und die eine Eingangssignal-Aufbereitung einschließen.

Elektronische Regelungssysteme für Kraftfahrzeuge, die den Fahrer entlasten und die Sicherheit und Fahrstabilität erhöhen, gewinnen ständig an Bedeutung. Dies gilt vor allem für Antiblockiersysteme (ABS), Antriebsschlupfregelungssysteme (ASR), Systeme zur elektronischen Regelung der Bremskraftverteilung (EBV) usw.. Zu den jüngeren Entwicklungen gehören Giermomentenregelung und Fahrstabilitätsregelung (GMR und FSR); dies sind nur einige Beispiele. Es ist auch schon bekannt, mehrere Regelungssysteme zu einem Verbund zusammenzuschließen.

Zur Lösung komplexer Regelaufgaben werden heutzutage Mikrorechnerstrukturen unterschiedlicher Art eingesetzt. Aus der deutschen Patentschrift DE 32 34 637 C2 ist z.B. ein ABS bekannt, dessen Regler zwei (oder mehrere) parallel arbeitende Mikrocontroller zur Erzeugung der Bremsdrucksteuersignale aufweist. Diese Mikrocontroller verarbeiten die gleichen Eingangssignale nach einem identischen Computerprogramm. Die Ausgangssignale und ggf. auch interne Signale der Mikrocontroller werden auf Übereinstimmung überwacht, um Fehlfunktionen in einem der beiden Controller zu erkennen. Weichen die redundant in den Mikrocontrollern verarbeiteten Signale voneinander ab, wird die elektronische Regelung abgeschaltet, um sicherzustellen, daß zumindest ein ungeregeltes Bremsen möglich bleibt.

Des weiteren ist aus der DE 41 37 124 Al bereits eine derartige Schaltungsanordnung mit sogen. asymmetrischer Redundanz bekannt. Die Eingangssignale, nämlich die mit Hilfe von Radsensoren gewonnenen, das Drehverhalten der Räder wiedergebenden Signale, werden, ebenso wie in dem vorgenannten Fall, zwei parallelen Mikrocontrollern zugeleitet, von denen jedoch nur der eine das volle Regelungsprogramm abarbeitet, während der zweite die Regelphilosophie in vereinfachter Form nachbildet bzw. die Eingangssignale im Vergleich zu dem Haupt-Mikrocontroller mit Hilfe vereinfachter Algorithmen verarbeitet. Durch Vergleich der Ausgangssignale beider Mikrocontroller läßt sich dann trotz der vereinfachten Verarbeitung in einem der beiden Mikrocontroller erkennen, ob die Datenverarbeitung fehlerhaft oder korrekt war.

Bei der Erweiterung eines Kraftfahrzeug-Regelungssystems, z.B. einer ABS/ASR-Anlage, durch eine rechenaufwendige Fahrstabilitätsregelung (FSR oder GMR), ist es grundsätzlich möglich, zusätzlich ein komplettes Regelungssystem, das auch die Sicherheitsfunktionen einschließt, zu installieren. Dies hat den Vorteil, daß die einzelnen Komponenten, sowohl die bisherige ABS/ASR-Anlage, als auch die Fahrstablitätsregelung, unabhängig voneinander sind und daß beim Auftreten von Defekten oder Störungen nur die betroffene Komponente ausfällt.

Es wäre grundsätzlich auch denkbar, bei einer Erweiterung der Grundstruktur (ABS/ASR) durch eine Fahrstablitätsregelung, die zusätzliche Rechenleistung, einschließlich der Überwachungsfunktionen, in die Rechnerstruktur mit einzubeziehen, wenn Mikrorechnersysteme ausreichender Leistung zur Verfügung stehen. Dies hätte allerdings den Nachteil, daß beim Auftreten eines Fehlers in einer Komponente das gesamte System abgeschaltet werden müßte. Da ein solches Gesamtsystem ziemlich komplex und aufwendig ist, wäre die Fehlerwahrscheinlichkeit relativ hoch.

Der Erfindung liegt nun die Aufgabe zugrunde, eine Mikroprozessoranordnung für ein komplexes Fahrzeugregelungssystem zu entwickeln, das beispielsweise ABS/ASR und GMR (FSR) umfaßt und sich durch hohe Betriebssicherheit sowie relativ geringen Aufwand auszeichnet, und bei der, wenn ein Fehler auftritt, möglichst nur die betroffene Komponente abgeschaltet zu werden braucht.

Es hat sich gezeigt, daß diese Aufgabe gemäß Anspruch 1 durch eine Mikroprozessoranordnung der eingangs genannten Art gelöst werden kann, deren Besonderheit darin besteht, daß drei Mikroprozessorsysteme vorhanden und die einzelnen Funktionen derart aufgeteilt sind, daß das erste Mikroprozessorsystem zusammen mit dem zweiten Mikroprozessorsystem die ABS-und/oder ASR-Funktion, einschließlich der Überwachung dieser Funktionen durch zumindest teilweise redundante Signal- oder Datenverarbeitung und Abschalten der Regelung beim Auftreten von Redundanz-Störungen, ausführt, und daß das dritte Mikroprozessorsystem zusammen mit dem zweiten Mikroprozessorsystem die weitere Regelfunktion, einschließlich der Überwachung der weiteren Regelfunktion, ausführt.

Die erfindungsgemäße Mikroprozessoranordnung baut also auf einer bisherigen ABS/ASR-Struktur auf, einschließlich der Überwachung durch redundante Signalverarbeitung, und ermöglicht die Einbeziehung z.B. einer rechenaufwendigen, komplexen Giermomenten- oder Fahrstabilitätsregelung durch Verwendung lediglich eines weiteren Mikroprozessorsystems. Für diese Fahrstabilitätsregelung gilt ebenfalls eine sehr hohe Betriebssicherheit, weil eine redundante oder teilweise redundante Verarbeitung der FSR-Daten mit Hilfe der zweiten Mikroprozessoranordnung, die vornehmlich die ABS/ASR-Funktionen ausführt, stattfindet. Beim Erkennen einer Fehlfunktion in der FSR-Komponente kann die ABS/ASR-Funktion ohne Einbußen an Betriebssicherheit fortgesetzt werden.

Einige besonders vorteilhafte Ausführungsbeispiele der Erfindung sind in den Unteransprüchen beschrieben. So ist es in manchen Fällen günstig, die Aufbereitung der für die Blockierschutz- und/oder Antriebsschlupfregelung benötigten Eingangssignale, insbesondere die relativ aufwendige Aufbereitung von Raddrehzahlsignalen, im ersten Mikroprozessorsystem vorzunehmen. Die für die weitere Regelfunktion zusätzlich benötigten Eingangssignale können ebenfalls in dem ersten System aufbereitet werden; sie werden jedoch zweckmäßigerweise in dem zweiten und/oder in dem dritten Mikroprozessorsystem aufbereitet.

Die Datenverarbeitung für die Regel funktionen kann in dem ersten und zweiten Mikroprozessorsystem nach dem gleichen Programm und gleichzeitig ablaufen. Bei intakter Arbeitsweise müssen die Ergebnisse beider Systeme vollständig übereinstimmen. Andererseits ist es jedoch nach einem weiteren Ausführungsbeispiel der Erfindung auch möglich und besonders zweckmäßig, die Mikroprozessoranordnung derart auszulegen, daß die Datenverarbeitung in dem ersten Mikroprozessorsystem im Vergleich zur Datenverarbeitung in dem zweiten System nach einem vereinfachten Regelalgorithmus abläuft, der den Regelalgorithmus im zweiten Mikroprozessorsystem lediglich nachbildet, und zwar derart, daß durch Vergleich der Ergebnisse der Datenverarbeitung des ersten mit den Ergebnissen des zweiten Mikroprozessorsystems eine fehlerhafte Arbeitsweise eines der beiden Systeme erkennbar ist.

Zur Überwachung der in dem dritten Mikroprozessorsystem installierten Regelfunktion, z. B. GMR, ist es zweckmäßig, die zugehörige Signal- oder Datenverarbeitung redundant in dem zweiten Mikroprozessorsystem - in identischer oder in vereinfachter bzw. nachgebildeter Form - auszuführen.

Nach einem weiteren Ausführungsbeispiel der Erfindung ist es vorgesehen, daß zur Überwachung der weiteren Regelfunktion im zweiten Mikroprozessorsystem ein im Vergleich zur Datenverarbeitung im dritten System vereinfachter Algorithmus abläuft, so daß wiederum durch Vergleich der Ergebnisse Fehler zu erkennen sind.

Eine weitere, vorteilhafte Ausführungsart der Erfindung besteht darin, die Mikroprozessoranordnung derart auszulegen, daß die ABS-/ASR-Funktionen auch dann fortgesetzt werden, wenn die Überwachung der weiteren Regelfunktion eine Störung erkennt und die weitere Regelfunktion außer Kraft setzt.

Die drei Mikroprozessorsysteme der erfindungsgemäßen Mikroprozessoranordnung sind zweckmäßigerweise über einen Ringbus miteinander verbunden, wobei jedes Mikroprozessorsystem mit einem schreib- und lesbaren Schieberegister ausgerüstet ist und wobei die Daten ständig in einer fest vorgegebenen Sequenz oder per Protokoll weitergegeben und/oder ausgetauscht werden. Natürlich ist es auch möglich und in manchen Fällen vorteilhaft, den Datentransfer zwischen den drei Mikroprozessorsystemen über Parallel-Bussysteme oder sternförmig abzuwickeln.

Weiterhin ist es vorteilhaft, in dem ersten Mikroprozessorsystem, das die ABS- und ASR-Funktion ausführt, eine EBV-Funktion (EBV = elektronische Regelung der Bremskraftverteilung) und ggf. auch die erforderliche Elektronik bzw. Programmstruktur für eine Bremsassistent-Funktion (BA-Funktion) unterzubringen. Die hierfür benötigten Informationen werden ebenfalls mit Hilfe der Radsensoren und zusätzlicher Sensoren, z.B. eines für den Bremsassistenten erforderlichen Pedalbetätigungssensor, erzeugt.

Schließlich besteht eine vorteilhafte Ausführungsart der erfindungsgemäßen Mikroprozessoranordnung noch darin, daß die einzelnen Funktionen derart auf die drei Mikroprozessorsysteme aufgeteilt sind, daß in dem ersten Mikroprozessorsystem zumindest die für ABS- und/oder ASR-Funktionen benötigten Eingangssignale aufbereitet werden, daß in dem zweiten Mikroprozessorsystem die Regel funktionen (ABS,ASR,GMR) ausgeführt werden, und daß die Überwachung zumindest der ABS- und/oder ASR-Funktionen in dem ersten Mikroprozessorsystem und die Überwachung der weiteren Regelfunktion in dem dritten Mikroprozessorsystem (MP3.4) erfolgen, wobei zur Überwachung der Regel funktionen die Eingangsdaten nach einem im Vergleich zu der vollständigen Datenverarbeitung vereinfachten Algorithmus verarbeitet werden, die Ergebnisse der vollständigen Datenverarbeitung mit den Ergebnissen der vereinfachten Datenverarbeitung verglichen werden und beim Auftreten von Abweichungen die Regelung teilweise oder vollständig abgeschaltet oder geändert wird.

Es bietet sich insbesondere bei der zuletzt genannten Ausführungsart an, in dem ersten und/oder dritten Mikroprozessor-system zusätzlich Diagnose-Funktionen oder Service-Funktionen unterzubringen.

Weitere Einzelheiten der Erfindung gehen aus der folgenden Beschreibung von Ausführungsbeispielen anhand der beigefügten Abbildungen hervor.

Es zeigen
- Fig. 1 - 4: in schematischer Darstellung alternative Ausführungsbeispiele von Mikroprozessoranordnungen nach der Erfindung mit unterschiedlicher Aufteilung der Funktionen auf die einzelnen Mikroprozessorsysteme und
- Fig. 5: in schematisch vereinfachter Darstellungsweise weitere Einzelheiten des Ausführungsbeispiels nach Fig. 3.

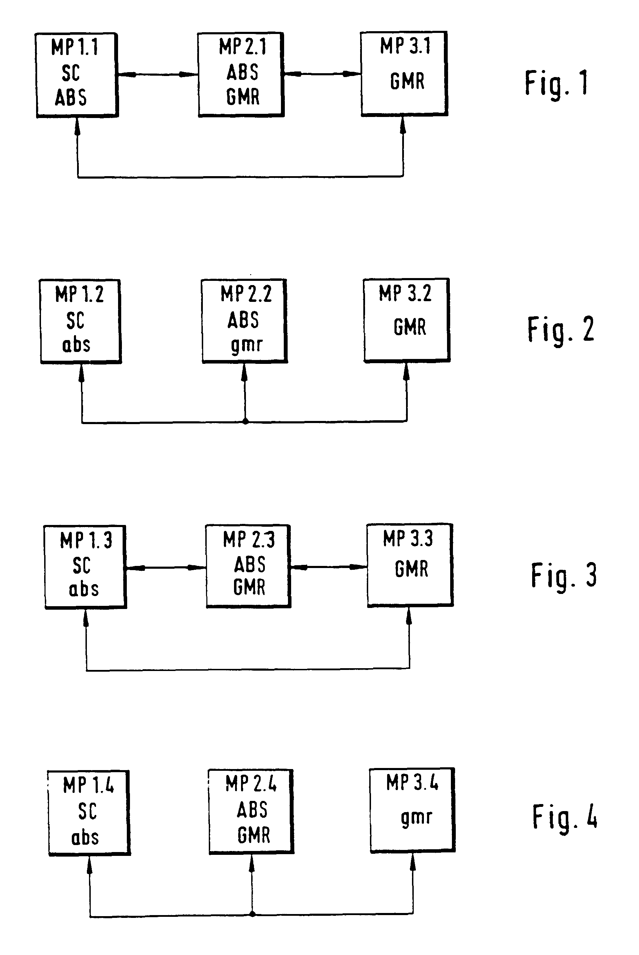

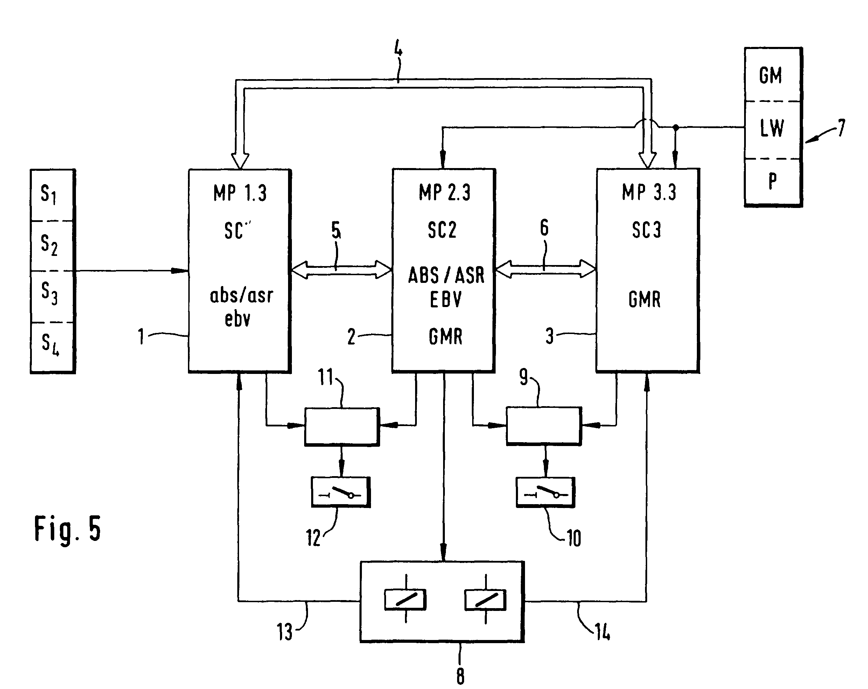

Die erfindungsgemäßen Mikroprozessoranordnungen bestehen grundsätzlich aus drei Mikroprozessorsystemen MP1,MP2,MP3, die untereinander durch ein Bussystem verbunden sind. In den Ausführungsbeispielen nach Fig. 1 und Fig. 3 ist ein Ringbus, nach Fig. 2 und 4 ein sternförmiger Bus vorgesehen. Die Daten werden zweckmäßigerweise mit Hilfe von schreib- und lesbaren Schieberegistern, die Bestandteile der Mikroprozessorsysteme MP1,MP2,MP3 sind, mit einer fest vorgebenen Sequenz oder per Protokoll ständig weitergegeben und ausgetauscht. Es handelt in dem vorliegenden Fall um Mikroprozessoranordnungen für ein Kraftfahrzeug-Regelungssystem, das, wie Fig. 5 zu entnehmen ist, sowohl eine Blockierschutzregelung (ABS), eine Antriebsschlupfregelung (ASR) als auch eine Giermomentenregelung (GMR) umfaßt und daher auch zur Fahrstabilitätsregelung eingesetzt werden kann. Außerdem ist eine elektronische Regelung der Bremskraftverteilung (EBV) vorgesehen. Die aufwendige Aufbereitung der Eingangssignale, insbesondere der Radsensorsignale, ist mit SC (Signal Conditioning) bezeichnet.

Die Regelungsfunktionen für das ABS, ASR und EBV sind grundsätzlich in dem gleichen Mikroprozessorsystem zusammengefaßt und der Einfachheit halber in den Fig. 1 bis 4 mit "ABS" bezeichnet. Mit kleinen Buchstaben "abs" bzw. "abs/asr/ebv" "gmr" sind in den Figuren 1 bis 5 diejenigen Rechenprozesse symbolisiert, die im Vergleich zu den mit großen Buchstaben "ABS/ASR/EBV" bzw. "GMR" bezeichneten Funktionen bzw. Datenverarbeitungsvorgänge nach einem vereinfachten Algorithmus ablaufen und nur zur Überprüfung oder Überwachung der vollständigen Datenverarbeitungsprozesse (ABS/ASR/EBV und GMR) dienen.

Mit Hilfe der erfindungsgemäßen Mikroprozessoranordnungen werden grundsätzlich die Daten stets in zwei Mikroprozessorsystemen redundant oder "teilweise redundant" verarbeitet; mit "teilweise redundant" ist hier die Verarbeitung nach dem vereinfachten, die Regelfunktionen nachbildenden Algorithmus bezeichnet. Die Berechnungen mit vereinfachtem Algorithmus sind mit den kleinen Buchstaben symbolisiert. Durch Vergleich der mit vollständiger Redundanz oder teilweiser Redundanz erzielten Ergebnisse wird bei den erfindungsgmäßen Mikroprozessoranordnungen in bekannter Weise die Funktion der Mikroprozessorsysteme überwacht.

Die Mikroprozessoranordnung nach Fig. 1 beruht auf redundanter Berechnung aller Funktionen. Nach gleichen Algorithmen werden in den Mikroprozessorsystemen MP1.1 und MP2.1 die ABS/ASR/EBV-Funktionen berechnet, in den Mikroprozessorsystemen MP2.1 und MP3.1 die GMR-Funktionen. Diese Art der redundanten Berechnung wird als "symmetrische Redundanz" bezeichnet. Die Signalaufbereitung SC, zumindest der Radsensorsignale, ist ebenfalls in dem Mikroprozessorsystem MP1.1 untergebracht.

In dem Ausführungsbeispiel nach Fig. 2 werden dagegen sowohl die ABS-Funktionen (wie zuvor erläutert: einschließlich ASR und EBV), als auch die GMR-Funktionen dadurch überwacht, daß die Ergebnisse der vollständigen Berechnungen in den Mikroprozessorsystemen MP2.2 und MP3.2 mit den Ergebnissen vereinfachter Datenverarbeitung (abs bzw. gmr) verglichen werden. Diese Art der Überwachung wird als "asymmetrische Redundanz" bezeichnet.

Nach Fig. 3 wird bei der Berechnung und Überwachung der GMR-Funktionen von der symmetrischen Redundanz, bei den ABS-Funktionen von der asymmetrischen Redundanz Gebrauch gemacht.

Fig. 4 unterscheidet sich von dem Ausführungsbeispiel nach Fig. 2 dadurch, daß in einem Mikroprozessorsystem MP2.4 sowohl die ABS- als auch die GMR-Funktionen untergebracht sind. Die beiden anderen Mikroprozessorsysteme MP1.4 und MP3.4 übernehmen die Datenvereinfachung nach den vereinfachten Algorithmen; für diese beiden genügen daher einfachere Mikroprozessorsysteme, oder es bleibt Platz für zusätzliche Diagnose- und/oder Service-Funktionen.

Die Ausgestaltung und Arbeitsweise einer erfindungsgemäßen Mikroprozessoranordnung wird nun anhand der Fig. 5 näher erläutert. Diesem Beispiel liegt die gleiche Aufteilung der Funktionen wie in dem Beispiel nach Fig. 3 zugrunde.

Die Mikroprozessorsysteme 1,2,3 (MP1.3,MP2.3,MP3.3) sind hier über einen Ringbus 4,5,6 miteinander verbunden. Mit Hilfe von Radsensoren S₁ bis S₄ werden Signale gewonnen, die das Drehverhalten der einzelnen Fahrzeugräder wiedergeben. Diese Informationen werden für alle Regelungssysteme (ABS,ASR,EBV, GMR) benötigt. Zusätzliche Informationen und Regelgrößen, die vor allem für die Giermomentenregelung (GMR) erforderlich sind, werden mit Hilfe einer weiteren Sensoreinheit 7 gewonnen, die z.B. einen Lenkwinkelsensor LW, einen Giermomentensensor GM oder Querbeschleunigungssensor, Drucksensoren P usw. - je nach Ausführungsart und Anforderungen an das Regelungssystem - umfassen. Zumindest manche der mit der Sensoreinheit 7 ermittelten Informationen sind auch zur Verbesserung und/oder Überwachung der anderen Regelungssysteme ABS/ASR/EBV von Nutzen.

In dem ersten Mikroprozessorsystem 1 (MP1.3) ist im Beispiel nach Fig. 5 eine Signal-Aufbereitung SC für die Radsensorsignale untergebracht. Die Aufbereitung der von der Sensoreinheit 7 gelieferten Signale findet im Beispiel nach Fig. 5 in entsprechenden Programm- oder Hardwarestrukturen SC2,SC3 der Mikroprozessorsysteme 2 und 3 statt.

Im zweiten Mikroprozessorsystem 2 (MP2.3) ist im vorliegenden Ausführungsbeispiel die Datenverarbeitung für das Blockierschutzregelungssystem (ABS), einschließlich der Antriebsschlupfregelung (ASR) und der elektronischen Regelung der Bremskraftverteilung (EBV), als auch die Datenverarbeitung für die Giermomentenregelung (GMR) untergebracht. In Abhängigkeit von den Sensorsignalen, die die Radsensoren S₁ bis S₄ und die Sensoreinheit 7 liefern, werden in dem Mikroprozessorsystem 2 Bremsdrucksteuersignale errechnet, mit denen in bekannter Weise Hydraulikventile, Druckmodulatoren, Hydraulikpumpen usw.- symbolisiert in Fig. 5 durch eine hydraulische Einheit 8 - angesteuert werden. Die hydraulische Einheit 8 enthält alle Komponenten zur Einstellung und Modulation des Bremsdruckes in den einzelnen Radbremsen eines Fahrzeugs.

In dem dritten Mikroprozessorsystem 3 werden ebenfalls die zur Giermomentenregelung (GMR) und Fahrstabilitätsregelung erforderlichen Berechnungen ausgeführt. Folglich kann nun durch Vergleich der redundant in den Systemen 2 und 3 verarbeiteten Daten die Funktion der Giermomentenregelung überwacht werden. Mit Hilfe eines Redundanzgliedes 9, das die GMR-Ausgangssignale der Mikroprozessorsysteme 2 und 3 vergleicht, wird beim Auftreten von Abweichungen eine Fehlermeldung ausgelöst und erforderlichenfalls ein Schalter 10 angesteuert, der die Regelung zeitweise oder bis zur Behebung des Fehlers außer Funktion setzt.

Das Redundanzglied 9 wird - entgegen der zum besseren Verständnis der Wirkungsweise vereinfachten Darstellung in Fig. 5 - ebenfalls redundant ausgebildet und durch Software, d.h. durch entsprechende Programmierung der Mikroprozessoren realisiert. Tatsächlich findet ein Vergleich der Ausgangssignale bzw. der in den Prozessoren ablaufenden Prozesse sowohl in dem Mikroprozessorsystem 2 als auch in dem System 3 statt, wie dies z.B. aus der eingangs genannten Patentschrift DE 32 34 637 C2 bekannt ist. Der Schalter 10 in Fig. 5 steht ebenfalls für ein redundantes, zwei Schalter oder zwei Schalterfunktionen umfassendes Abschaltsystem.

Ein zweites Redundanzglied 11 vergleicht die ABS/ASR/EBV-Signale mit den auf Basis vereinfachter Algorithmen gewonnenen abs/asr/ebv-Signalen. Treten Abweichungen von dieser asymmetrischen Redundanz auf, liegt ein Fehler vor, der wiederum über einen Schalter 12 zur Abschaltung der Regelung führt.

Das Redundanzglied 11 wird natürlich zweckmäßigerweise ebenso wie das Redundanzglied 9 durch Software bzw. Programmierung realisiert. Sowohl im Mikroprozessorsystem 1 als auch im Mikroprozessorsystem 2 findet unabhängig voneinander ein Signalvergleich statt. Die Abschaltung mit Hilfe eines Schalters 12 wird ebenfalls redundant ausgeführt. Redundanzglieder 11 und 9 sowie Schalter 12 und 10 sind nach dem gleichen Redundanzprinzip verwirklicht.

Bei der Anordnung nach Fig. 5 wird die Betätigung und der Schaltzustand der Ventile, die in der hydraulischen Einheit 8 symbolisch angedeutet sind, über Signalleitungen 13,14 zu dem Mikroprozessorsystem 1 (MP1.3) und dem Mikroprozessorsystem 3 (MP3.3), das die GMR-Funktion enthält, rückgemeldet. Es wird überprüft, ob die jeweiligen Ventilfunktionen mit den Berechnungen im System 3 bzw. mit der vereinfachten Berechnung im System 1 übereinstimmen.

Ein wesentlicher Vorteil der erfindungsgemäßen Mikroprozessoranordnung besteht darin, daß zum einen mit relativ geringem Aufwand, d.h. relativ wenigen Mikroprozessorsystemen und vergleichsweise geringem Rechenaufwand, die beschriebenen Regelungsvorgänge - insbesondere ABS, ASR, EBV und GMR -, einschließlich der redundanten oder teilweise redundanten, für die Überwachung notwendigen Rechenvorgänge, verwirklicht werden können. Zum anderen wird eine relative Unabhängigkeit der Regelungssysteme voneinander erreicht, die es erlaubt, z.B. beim Erkennen einer Fehlfunktion im GMR-System nur diesen Zweig abzuhalten oder auf eine unkritische Funktion zu begrenzen, die Funktion der übrigen Regelungssysteme (ABS/ASR/EBV usw.) dagegen aufrechtzuerhalten. Dies führt insgesamt, wie ohne weiteres einzusehen ist, zu einem erheblichen Sicherheitsgewinn.

## Patentansprüche

1. Mikroprozessoranordnung für ein Fahrzeug-Regelungssystem mit mehreren, untereinander durch Bussysteme verbundenen Mikroprozessorsystemen, die zumindest eine Blockierschutz-(ABS) und/oder Antriebsschlupfregelung (ASR) sowie mindestens eine weitere, rechenaufwendige Regelfunktion, wie Giermomentenregelung (GMR), und Überwachungsfunktionen ausführen und die eine Eingangssignal-Aufbereitung einschließen, dadurch **gekennzeichnet,**
- daß drei Mikroprozessorsysteme (1,2,3,MP1,MP2,MP3) vorhanden sind und daß die einzelnen Funktionen derart auf die drei Mikroprozessorsysteme aufgeteilt sind,
- daß das erste Mikroprozessorsystem (1,MP1) zusammen mit dem zweiten Mikroprozessorsystem (2,MP2) die ABS-und/ oder ASR-Funktion, einschließlich der Überwachung dieser Funktionen durch zumindest teilweise redundante Signal- oder Datenverarbeitung und Abschalten der Regelung beim Auftreten von Redundanz-Störungen, ausführt und
- daß das dritte Mikroprozessorsystem (3,MP3) zusammen mit dem zweiten Mikroprozessorsystem (2,MP2) die weitere Regelfunktion (GMR), einschließlich der Überwachung der weiteren Regelfunktion (GMR), ausführt.

2. Mikroprozessoranordnung nach Anspruch 1, dadurch **gekennzeichnet,** daß das erste Mikroprozessorsystem (MP1) zusammen mit dem zweiten Mikroprozessorsystem zusätzlich eine EBV-Funktion (elektronische Regelung der Bremskraftverteilung) ausführt.

3. Mikroprozessoranordnung nach Anspruch 1 oder 2, dadurch **gekennzeichnet,** daß das erste Mikroprozessorsystem (MP1) zusammen mit dem zweiten Mikroprozessorsystem (MP2) zusätzlich eine BA-Funktion (Bremsassistent-Funktion) ausführt.

4. Mikroprozessoranordnung nach einem oder mehreren der Ansprüche 1 bis 3, dadurch **gekennzeichnet,** daß die Aufbereitung (SC) zumindest der für die Blockierschutz-(ABS) und/oder Antriebsschlupfregelung (ASR) benötigten Eingangssignale, insbesondere die Aufbereitung von Raddrehzahlsignalen, in dem ersten Mikroprozessorsystem (MP1) erfolgt.

5. Mikroprozessoranordnung nach Anspruch 4, dadurch **gekennzeichnet,** daß die Aufbereitung (SC2,SC3) der für die weitere Regelfunktion (GMR) zusätzlich benötigten Eingangssignale in dem zweiten (MP2.3) und/oder in dem dritten (MP3.3) Mikroprozessorsystem erfolgt.

6. Mikroprozessoranordnung nach einem oder mehreren der Ansprüche 1 bis 5, dadurch **gekennzeichnet,** daß die Datenverarbeitung für die Regel funktionen in dem ersten (MP1.1) und zweiten (MP2.1) Mikroprozessorsystem nach gleichem Programm abläuft.

7. Mikroprozessoranordnung nach einem oder mehreren der Ansprüche 1 bis 5, dadurch **gekennzeichnet,** daß die Datenverarbeitung in dem ersten Mikroprozessorsystem (MP1.2,MP1.3,MP1.4) im Vergleich zu der Datenverarbeitung in dem zweiten Mikroprozessorsystem (MP2.2,MP2.3,MP3.4) nach einem vereinfachten, den Regelalgorithmus der im zweiten Mikroprozessorsystem (MP2.2,MP2.3,MP2.4) ausgeführten Regel-Funktionen nachbildenden Algorithmus abläuft, derart, daß durch Vergleich der Ergebnisse der Datenverarbeitung des ersten mit den Ergebnissen des zweiten Mikroprozessorsystems eine fehlerhafte Arbeitsweise des ersten oder zweiten Mikroprozessorsystems erkennbar ist.

8. Mikroprozessoranordnung nach einem der Ansprüche 1 bis 6, dadurch **gekennzeichnet,** daß die Überwachung der weiteren Regelfunktion (GMR-Funktion) durch redundante Signal- oder Datenverarbeitung in dem zweiten (MP2.3) und dritten (MP3.3) Mikroprozessorsystem erfolgt.

9. Mikroprozessoranordnung nach einem oder mehreren der Ansprüche 1 bis 7, dadurch **gekennzeichnet,** daß die zur Überwachung der weiteren Regelfunktion (GMR) dienende, im zweiten Mikroprozessorsystem (MP2.2) installierte Datenverarbeitung nach einem vereinfachten, den Regelalgorithmus des dritten Mikroprozessorsystems (MP3.2) nachbildenden Algorithmus abläuft, derart, daß durch Vergleich der Ergebnisse der Datenverarbeitung des dritten Mikroprozessorsystems (MP3.2) mit den Ergebnissen der Datenverarbeitung mit Hilfe des vereinfachten, nachbildenden Algorithmus im zweiten Mikroprozessorsystem (MP2.2) Fehler erkennbar sind.

10. Mikroprozessoranordnung nach einem oder mehreren der Ansprüche 1 bis 9, dadurch **gekennzeichnet,** daß die ABS-/ASR-/EBV-Funktionen, wenn die Überwachung der weiteren Regelfunktion (GMR-Funktion) eine Störung erkennt, fortgesetzt werden.

11. Mikroprozessoranordnung nach einem oder mehreren der Ansprüche 1 bis 10, dadurch **gekennzeichnet,** daß die drei Mikroprozessorsysteme (MP1.1,MP2.1,MP3.1;MP2.3,MP3.3) über einen Ringbus (4, 5, 6) miteinander verbunden sind, daß jedes Mikroprozessorsystem mit einem schreib- und lesbaren Schieberegister ausgerüstet ist und daß die Daten ständig in einer fest vorgegebenen Sequenz oder per Protokoll weitergegeben und/oder ausgetauscht werden.

12. Mikroprozessoranordnung nach einem oder mehreren der Ansprüche 1 bis 11, dadurch **gekennzeichnet,**
- daß die einzelnen Funktionen derart auf die drei Mikroprozessorsysteme (MP1.4,MP2.4,MP3.4) aufgeteilt sind,
- daß in dem ersten Mikroprozessorsystem (MP1.4) zumindest die für ABS- und/oder ASR-Funktionen benötigten Eingangssignale aufbereitet werden,
- daß in dem zweiten Mikroprozessorsystem (MP2.4) die Regelfunktionen (ABS,ASR,EBV;GMR) ausgeführt werden, und
- daß die Überwachung zumindest der ABS- und/oder ASR-Funktionen in dem ersten Mikroprozessorsystem (MP1.4) und die Überwachung der weiteren Regelfunktion (GMR-Funktion) in dem dritten Mikroprozessorsystem (MP3.4) erfolgen, wobei zur Überwachung der Regelfunktionen die Eingangsdaten nach einem im Vergleich zu der vollständigen Datenverarbeitung vereinfachten, die Regel funktionen nachbildenden Algorithmus verarbeitet werden, die Ergebnisse der vollständigen Datenverarbeitung mit den Ergebnissen der vereinfachten Datenverarbeitung verglichen werden und beim Auftreten von Abweichungen die Regelung teilweise oder vollständig abgeschaltet oder geändert wird.

13. Mikroprozessoranordnung nach einem oder mehreren der Ansprüche 1 bis 12, dadurch **gekennzeichnet,** daß in dem ersten (MP1) und/oder dritten (MP3) Mikroprozessorsystem zusätzlich Diagnose-Funktionen und/oder Service-Funktionen vorhanden sind.

## Claims

1. Microprocessor arrangement for use in a vehicle control system including a plurality of microprocessor systems that are linked by bus systems and perform at least anti-lock control (ABS) and/or traction slip control (ASR) and at least one other high-computation control function, such as yaw torque control (GMR), and monitoring functions, the microprocessor systems including the conditioning of input signals,
**characterized** in that
- three microprocessor systems (1, 2, 3 MP1, MP2, MP3) are provided, and in that the individual functions are allocated to the three microprocessor systems so
- that the first microprocessor system (1, MP1) along with the second microprocessor system (2, MP2) performs the ABS and/or ASR functions, including the monitoring of these functions, by at least partly redundant signal or data processing operations and deactivation of the control when redundance troubles occur, and
- that the third microprocessor system (3, MP3) along with the second microprocessor system (2, MP2) performs the other control function (GMR), including the monitoring of the other control function (GMR).

2. Microprocessor arrangement as claimed in claim 1,
**characterized** in that the first microprocessor system (MP1) along with the second microprocessor system additionally performs an EBV function (electronic control of brake force distribution).

3. Microprocessor arrangement as claimed in claim 1 or 2,
**characterized** in that the first microprocessor system (MP1) along with the second microprocessor system (MP2) additionally performs a BA function (brake assistant function).

4. Microprocessor arrangement as claimed in any one or more of claims 1 to 3,
**characterized** in that the conditioning (SC) of at least the input signals required for anti-lock control (ABS) and/or traction slip control (ASR), in particular the conditioning of wheel speed signals, is effected in the first microprocessor system (MP1).

5. Microprocessor arrangement as claimed in claim 4,
**characterized** in that the conditioning (SC2, SC3) of the input signals which are additionally required for the other control function (GMR) is effected in the second (MP2.3) and/or in the third (MP3.3) microprocessor system.

6. Microprocessor arrangement as claimed in any one or more of claims 1 to 5,
**characterized** in that the data processing for the control functions is performed in the first (MP1.1) and second (MP2.1) microprocessor systems pursuant to the same program.

7. Microprocessor arrangement as claimed in any one or more of claims 1 to 5,
**characterized** in that the data processing in the first microprocessor system (MP1.2, MP1.3, MP1.4), compared to the data processing in the second microprocessor system (MP2.2, MP2.3, MP3.4), is performed according to a simplified control algorithm which reproduces the control algorithm of the control functions performed in the second microprocessor system (MP2.2, MP2.3, MP2.4), namely in such a way that faulty operation of the first or the second microprocessor system is identifiable by comparison of the results of data processing of the first microprocessor system with the results of the second microprocessor system.

8. Microprocessor arrangement as claimed in any one of claims 1 to 6,
**characterized** in that the monitoring of the other control function (GMR function) is performed by redundant signal or data processing in the second (MP2.3) and the third (MP3.3) microprocessor system.

9. Microprocessor arrangement as claimed in any one or more of claims 1 to 7,
**characterized** in that the data processing, which is installed in the second microprocessor system (MP2.2) and used to monitor the other control function (GMR), is performed in a simplified algorithm, which reproduces the control algorithm of the third microprocessor system (MP3.2), namely in such a way that errors can be identified by comparison of the results of the data processing of the third microprocessor system (MP3.2) with the results of the data processing by way of the simplified, reproducing algorithm in the second microprocessor system (MP2.2).

10. Microprocessor arrangement as claimed in any one or more of claims 1 to 9,
**characterized** in that the ABS/ASR/EBV functions are continued when the monitoring of the other control function (GMR function) identifies a fail condition.

11. Microprocessor arrangement as claimed in any one or more of claims 1 to 10,
**characterized** in that the three microprocessor systems (MP1.1, MP2.1, MP3.1; MP2.3, MP3.3) are interconnected by a ring bus (4, 5, 6), in that each microprocessor system includes a writable and readable shift register, and in that the data are transmitted and/or exchanged constantly in an invariably predetermined sequence or by a software protocol.

12. Microprocessor arrangement as claimed in any one or more of claims 1 to 11,
**characterized** in
- that the individual functions are allocated to the three microprocessor systems (MP1.4, MP2.4, MP3.4) so
- that in the first microprocessor system (MP1.4) at least the input signals are conditioned which are required for ABS and/or ASR functions,
- that in the second microprocessor system (MP2.4) the control functions (ABS, ASR, EBV; GMR) are performed, and
- that the monitoring of at least the ABS and/or ASR functions takes place in the first microprocessor system (MP1.4), and the monitoring of the other control function (GMR function) takes place in the third microprocessor system (MP3.4), wherein to monitor the control functions, the input data are processed pursuant to an algorithm which is simplified as compared to the complete data processing and reproduces the control functions, the results of the complete data processing are compared with the results of the simplified data processing, and the control is partly or entirely deactivated or modified upon the occurrence of discrepancies.

13. Microprocessor arrangement as claimed in any one or more of claims 1 to 12,
**characterized** in that diagnosis functions and/or service functions are additionally provided in the first (MP1) and/or third (MP3) microprocessor systems.

## Revendications

1. Agencement de microprocesseurs pour systèmes de régulation de véhicule, comprenant plusieurs systèmes de microprocesseurs, reliés entre eux par des systèmes de bus, qui exécutent au moins une régulation antiblocage (ABS) et/ou une régulation du glissement de traction (ASR), ainsi qu'au moins une autre fonction de régulation consommant du calcul, telle qu'une régulation de couple de lacet (GMR), et des fonctions de surveillance et qui contiennent une mise en forme de signaux d'entrée, caractérisé en ce
- qu'il est prévu trois systèmes de microprocesseurs (1, 2, 3, MP1, MP2, MP3) et que les différentes fonctions sont réparties sur les trois systèmes de microprocesseurs de façon telle
- que le premier système de microprocesseur (1, MP1) exécute, en commun avec le deuxième système de microprocesseur (2, MP2), la fonction ABS et/ou la fonction ASR, y compris la surveillance de ces fonctions, au moyen d'un traitement de signaux ou de données au moins partiellement redondant et d'une mise hors service de la régulation lors de l'apparition de perturbations de redondance et
- que le troisième système de microprocesseur (3, MP3) exécute, en commun avec le deuxième système de microprocesseur (2, MP2), l'autre fonction de régulation (GMR), y compris la surveillance de l'autre fonction de régulation (GMR).

2. Agencement de microprocesseurs suivant la revendication 1, caractérisé en ce que le premier système de microprocesseur (MP1) exécute en plus, en commun avec le deuxième système de microprocesseur, une fonction EBV (régulation électronique de la répartition de force de freinage).

3. Agencement de microprocesseurs suivant la revendication 1 ou 2, caractérisé en ce que le premier système de microprocesseur (MP1) exécute en plus, en commun avec le deuxième système de microprocesseur (MP2), une fonction BA (fonction d'assistant de freinage).

4. Agencement de microprocesseurs suivant une ou plusieurs des revendications 1 à 3, caractérisé en ce que la mise en forme (SC) d'au moins les signaux d'entrée nécessaires pour la régulation antiblocage (ABS) et/ou la régulation du glissement de traction (ASR), notamment la mise en forme de signaux de vitesse de rotation de roue, a lieu dans le premier système de microprocesseur (MP1).

5. Agencement de microprocesseurs suivant la revendication 4, caractérisé en ce que la mise en forme (SC2, SC3) des signaux d'entrée nécessaires en plus pour l'autre fonction de régulation (GMR) a lieu dans le deuxième (MP2.3) et/ou le troisième (MP3.3) systèmes de microprocesseur.

6. Agencement de microprocesseurs suivant une ou plusieurs des revendications 1 à 5, caractérisé en ce que le traitement de données correspondant aux fonctions de régulation se déroule dans le premier (MP1.1) et le deuxième (MP2.1) systèmes de microprocesseurs conformément au même programme.

7. Agencement de microprocesseurs suivant une ou plusieurs des revendications 1 à 5, caractérisé en ce que le traitement de données dans le premier système de microprocesseur (MP1.2, MP1.3, MP1.4) se déroule, en comparaison du traitement de données dans le deuxième système de microprocesseur (MP2.2, MP2.3, MP3.4), conformément à un algorithme simplifié copiant l'algorithme de régulation des fonctions de régulation exécutées dans le deuxième système de microprocesseur (MP2.2, MP2.3, MP2.4), de façon telle qu'une comparaison des résultats du traitement de données du premier système de microprocesseur avec les résultats du deuxième système de microprocesseur permet de reconnaître un fonctionnement défectueux du premier ou du second système de microprocesseur.

8. Agencement de microprocesseurs suivant l'une des revendications 1 à 6, caractérisé en ce que la surveillance de l'autre fonction de régulation (fonction GMR) a lieu par traitement redondant de signaux ou de données dans le deuxième (MP2.3) et le troisième (MP3.3) système de microprocesseur.

9. Agencement de microprocesseurs suivant une ou plusieurs des revendications 1 à 7, caractérisé en ce que le traitement de données servant à la surveillance de l'autre fonction de régulation (GMR) et installé dans le deuxième système de microprocesseur (MP2.2) se déroule conformément à un algorithme simplifié copiant l'algorithme de régulation du troisième système de microprocesseur (MP3.2), de façon telle qu'une comparaison des résultats du traitement de données du troisième système de microprocesseur (MP3.2) avec les résultats du traitement de données effectué dans le deuxième système de microprocesseur (MP2.2) au moyen de l'algorithme simplifié copiant permet de reconnaître des défaillances.

10. Agencement de microprocesseurs suivant une ou plusieurs des revendications 1 à 9, caractérisé en ce que, lorsque la surveillance de l'autre fonction de régulation (fonction GMR) reconnaît une perturbation, les fonctions ABS/ASR/EBV se poursuivent.

11. Agencement de microprocesseurs suivant une ou plusieurs des revendications 1 à 10, caractérisé en ce que les trois systèmes de microprocesseurs (MP1.1, MP2.1, MP3.1 MP2.3, MP3.3) sont reliés entre eux par un bus annulaire (4, 5, 6), en ce que chaque système de microprocesseur est équipé d'un registre à décalage à écriture et lecture et en ce que les données sont en permanence transmises et/ou remplacées suivant une séquence préfixée de manière fixe ou par protocole.

12. Agencement de microprocesseurs suivant une ou plusieurs des revendications 1 à 11, caractérisé
- en ce que les différentes fonctions sont réparties sur les trois systèmes de microprocesseurs (MP1.4, MP2.4, MP3.4) de façon telle
- qu'au moins les signaux d'entrée nécessaires pour les fonctions ABS et/ou ASR sont mis en forme dans le premier système de microprocesseur (MP1.4),
- que les fonctions de régulation (ABS, ASR, EBV ; GMR) sont exécutées dans le deuxième système de microprocesseur (MP2.4) et
- que la surveillance au moins des fonctions ABS et/ou ASR a lieu dans le premier système de microprocesseur (MP1.4) et la surveillance de l'autre fonction de régulation (fonction GMR) dans le troisième système de microprocesseur (MP3.4), et, pour surveiller les fonction de régulation, les données d'entrée sont traitées conformément à un algorithme qui est simplifié en comparaison du traitement de données complet et copie les fonctions de régulation, les résultats du traitement de données complet sont comparés aux résultats du traitement de données simplifié et, lorsque des écarts se présentent, la régulation est, partiellement ou totalement, mise hors service ou modifiée.

13. Agencement de microprocesseurs suivant une ou plusieurs des revendications 1 à 12, caractérisé en ce que, dans le premier (MP1) et/ou le troisième (MP3) systèmes de microprocesseurs, il est en plus prévu des fonctions de diagnostic et/ou des fonctions de service.
